# EUROPÄISCHE PATENTSCHRIFT

(11) **EP 1 425 973 B1**
(45) Veröffentlichungstag und Bekanntmachung des Hinweises auf die Patenterteilung: **11.05.2005**
(21) Anmeldenummer: 03026458.4
(22) Anmeldetag: 20.11.2003
(51) Int. Cl.: A23B 7/148, A01F 25/14

(54) **Verfahren zur Gasversorgung einer doppelwandigen Folienkammer**
Method for the supply of gas to a double chamber
Méthode pour l'introduction de gaz dans une chambre double

(30) Priorität: 06.12.2002 DE 10257350
(43) Veröffentlichungstag der Anmeldung: 09.06.2004
(73) Patentinhaber: FORSCHUNGSZENTRUM JÜLICH GMBH, 52425 Jülich (DE)
(72) Erfinder: Brauers, Theodor, Dr., 52428 Jülich (DE)

(56) Entgegenhaltungen:
- DE-A- 2 345 805
- DE-A- 19 514 681
- RU-C- 2 156 933
- US-A- 4 508 750
- PATENT ABSTRACTS OF JAPAN & JP 04 110581 A (DAIWA JITSUGYO KK), 13. April 1992 (1992-04-13)

## Beschreibung

Die Erfindung betrifft ein Verfahren zur Gasversorgung einer doppelwandigen Folienkammer.

Um eine kontrollierte (Gas)-Atmosphäre einzustellen, können unter anderem doppelwandige Folienkammern eingesetzt werden. In der Lebensmitteltechnik, Gewächshaustechnik, bei der Reifung und Lagerung von Obst und Gemüse werden beispielsweise Folienkammern eingesetzt, um für den jeweiligen Bedarf eine definierte Gasatmosphäre einstellen zu können. Auch für bestimmte Herstellungsprozesse müssen definierte atmosphärische Bedingungen, sogenannte Reinraumbedingungen, erfüllt werden, die z.B. auch innerhalb einer Folienkammer erzeugt werden können. Insbesondere für Untersuchungen in der Atmosphärenchemie ist die Simulation einer kontrollierten Atmosphäre und damit der Einsatz von Folienkammern von besonderer Bedeutung. Der Abbau von schädlichen Spurengasen in der Luft ist ein wichtiges Forschungsgebiet der Atmosphärenchemie. Obwohl Spurengase weniger als 0,001 Prozent ausmachen, spielen sie in der Atmosphäre eine zentrale Rolle. Das bekannteste Beispiel ist Ozon.

Besonders interessant ist eine hochreaktive Verbindung aus Wasserstoff und Sauerstoff, das Hydroxyl-Radikal (OH-Radikal). Dieses Spurengas kommt nur in geringsten Mengen in der Atmosphäre vor, ist aber für deren Selbstreinigungskraft von großer Bedeutung.

Dank neuer Messmethoden lässt sich die Konzentration der OH-Radikale zuverlässig bestimmen. Wind und Wetter erschweren jedoch die Messung dieses extrem kurzlebigen Radikals und deren Auswertung. Zudem lassen sich die Experimente unter gleichen Bedingungen nicht wiederholen. Dazu ändern sich die äußeren Faktoren zu schnell.

Um die Luft verschiedener Erdregionen in einer geschützten Kammer nachzuahmen, Wind und Wetter aber auszusperren wird daher eine doppelwandige Folienkammer eingesetzt. Im Inneren dieser Atmosphären-Simulationskammer können die photochemischen Reaktionen der gegenwärtigen und zukünftigen Atmosphäre für maritime, ländliche und städtische Luftmassen simuliert und störungsfrei untersucht werden.

Eine doppelwandige Teflonfolie bildet die Begrenzung dieser röhrenförmigen Folienkammer, die rund 300 m³ Luft fasst. Dieses Material ist durchlässig für die UV-Strahlung des Sonnenlichts, die die nötige Energie für alle in der Kammer ablaufenden chemischen Reaktionen liefert. Teflon ist chemisch inert, das heißt, es reagiert nicht mit den Spurengasen. Der Zwischenraum der Doppelwand wird ständig mit Reinstgasen gespült, damit sich die eingestellte Folienkammer-Atmosphäre nicht unbeabsichtigt durch Lecks oder Permeation mit Außenluft oder Komponenten der Außenluft vermischt. Dabei werden Druckdifferenzen von ca. -40 Pa zur Innenkammer und + 30 Pa zur Außenluft eingestellt. Das Aufrechterhalten dieser Druckdifferenzen ist notwendig für die Formstabilität der Folienkammer, die nur bei Überdruck auch Windböen standhält. Für die Spülung des Zwischenraums der Doppelwand wird bisher synthetische Luft eingesetzt, die aus 79% Stickstoff (Reinheit 6.0) und 21% Sauerstoff (Reinheit 6.0) zusammen gemischt wird. Da der Gasverbrauch für die Spülung des Zwischenraums der Doppelwand mit ca. 11 m³/h relativ hoch ist (Durchflußrate des Gases im Innenraum nur 3 m³/h), entstehen insbesondere durch den verwendeten Sauerstoff (53,7 ct/m³) im Laufe des Betriebs der doppelwandigen Folienkammer hohe Kosten.

Es ist daher Aufgabe der Erfindung, ein Verfahren zu schaffen, mit dem ein gegenüber dem bisher bekannten Verfahren wirtschaftlich günstigerer Betrieb einer doppelwandigen Folienkammer möglich wird, wobei gleichzeitig die Erfordernisse an die Reinheit der Atmosphäre in der Folienkammer erfüllt werden sollen.

Ausgehend vom Oberbegriff des Anspruchs 1 wird die Aufgabe erfindungsgemäß gelöst mit den im kennzeichnenden Teil des Anspruchs 1 angegebenen Merkmalen.

Die Erfindung betrifft ein Verfahren zur Gasversorgung einer doppelwandigen Folienkammer, dadurch gekennzeichnet, daß der Zwischenraum der Folienkammer nur mit einem einzelnen Gas gespült wird. Unter einem einzelnen Gas wird im Rahmen der vorliegenden Erfindung eine Einzelgaskomponente verstanden, welche nur aus einem einzelnen Gaselement (z.B. Stickstoff; Argon; Helium) besteht und einen hohen Reinheitsgrad von 99,5 bis 99,9999% (= Reinheitsgrad 6.0) aufweist, d.h. daher im Rahmen der technischen Möglichkeiten nahezu keine Verunreinigungen aufweist. Für das Verfahren sind alle chemisch inerten Gase wie z.B. Stickstoff, Argon oder Helium geeignet. Als besonders geeignet hat sich der Einsatz von Stickstoff erwiesen. Die Gasversorgung des Zwischenraums kann mit eine Durchflußrate von ca. ca. 0,01 bis 100 m³/h durchgeführt werden. Als besonders geeignet hat sich eine Durchflußrate von ca. 11 m³/h erwiesen. Bei niedrigeren Flußraten kann der Gasverbrauch reduziert werden, wobei hier die Gefahr der Verunreinigung des Innenraums mit Gasen, die unbeabsichtigt durch die Außenhülle, d.h. die Teflonfolie, permeieren größer wird. Bei Einstellung einer höheren Durchflußräte steigen die Kosten für den Gasverbrauch und sinkt gleichzeitig die Gefahr der Verunreinigung, weil durch die erhöhte Flußrate Gase, die zu Verunreinigungen führen können, schneller ausgespült werden. Um eine Kostenreduktion auf Grund des Gasverbrauchs zu erreichen, ist es weiterhin möglich, eine Gasreinigung der benutzten Gase durchzuführen und diese anschließend wieder zur Gasversorgung der Folienkammer zu nutzen. Die Gasreinigung kann nach den dem Fachmann bekannten Methoden, wie z. B. Absorption, Kondensation, Adsorption, Reaktion an Katalysatoren, durchgeführt werden.

Mit dem erfindungsgemäßen Verfahren ist es nunmehr möglich, eine kostengünstigere Gasversorgung der doppelwandigen Folienkammer zu ermöglichen. Durch den Ersatz des Gasgemisches der bisher verwendeten synthetischen Luft, mit einem Sauerstoffanteil von ca. 21%, durch ein einzelnes Gas, wie z.B. Stickstoff, können je nach Durchflußrate bei einem ganzjährigen Betrieb der Folienkammer Kosten von beispielsweise etwa 7000 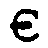 pro Jahr eingespart werden. Weitere Kosten können durch Recyclieren und Gasreinigung des für die Gasversorgung des Zwischenraums verwendeten Gases eingespart werden.

Weiterhin können durch die Verwendung eines einzelnen Gases im Zwischenraum, welches sich vom verwendeten Gas im Innenraum unterscheidet, eventuell auftretende Lecks zwischen Innenraum und Zwischenraum durch eine Gasanalyse im Zwischenraum entdeckt werden. Durch den Sauerstoffanteil der synthetischen Luft im Zwischenraum war beispielsweise der Nachweis von Sauerstoff, der aus dem Innenraum durch eventuelle Lecks oder Permeation in den Zwischenraum eintritt, bisher nicht möglich.

Vorteilhafte Weiterbildungen sind in den Unteransprüchen angegeben.

Die Zeichnungen zeigen eine beispielhafte Ausführungsform der doppelwandigen Folienkammer.

Es zeigt:

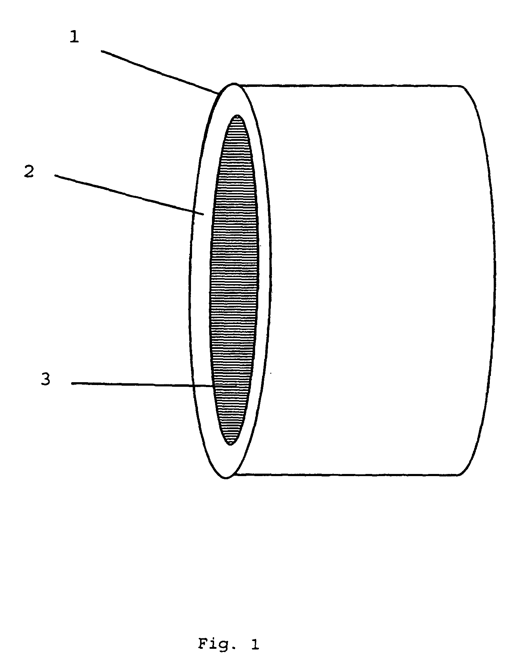

- Fig. 1:: Schnitt durch den Aufbau der doppelwandigen Folienkammer

Figur 1 zeigt einen Schnitt durch den Aufbau der doppelwandigen Folienkammer mit der doppelwandigen Außenhülle (1), beispielsweise aus Teflonfolie, die den röhrenförmigen Innenraum (3) der doppelwandigen Folienkammer begrenzt. Der Zwischenraum (2) der Außenhülle (1) wird mit Reinstluft gespült.

## Patentansprüche

1. Verfahren zur Gasversorgung einer doppelwandigen Folienkammer,
**dadurch gekennzeichnet, daß**
der Zwischenraum (2) der Folienkammer nur mit einem einzelnen Gas gespült wird.

2. Verfahren nach Anspruch 1,
**dadurch gekennzeichnet,**
**daß** das Gas in einem geschlossenen Kreislauf eingesetzt wird, der eine Gasreinigung umfaßt.

3. Verfahren nach einem der Ansprüche 1 bis 2,
**dadurch gekennzeichnet, daß**
Stickstoff eingesetzt wird.

4. Verfahren nach einem der Ansprüche 1 bis 2,
**dadurch gekennzeichnet, daß**
Argon eingesetzt wird.

## Claims

1. Method for the supply of gas to a double chamber
**characterised in that**
the space (2) of the chamber is only flushed with a single gas.

2. Method according to claim 1,
**characterised in**
**that** the gas is introduced into a closed loop, which incorporates gas purification.

3. Method according one of claims 1 to 2,
**characterised in that**
nitrogen is used.

4. Method according to one of claims 1 to 2
**characterised in that**
argon is used.

## Revendications

1. Procédé d'introduction de gaz dans une chambre en feuille à double paroi,
**caractérisé en ce que**
on balaie l'espace (2) intermédiaire de la chambre en feuille, seulement par un seul gaz.

2. Procédé suivant la revendication 1,
**caractérisé**
**en ce que** l'on utilise le gaz dans un circuit fermé qui comprend une épuration de gaz.

3. Procédé suivant l'une des revendications 1 à 2,
**caractérisé**
**en ce que** l'on utilise de l'azote.

4. Procédé suivant l'une des revendications 1 à 2,
**caractérisé**
**en ce que** l'on utilise de l'argon.
